# EUROPEAN PATENT APPLICATION

(11) **EP 4 589 432 A1**
(43) Date of publication of application: **23.07.2025**
(21) Application number: 25150466.8
(22) Date of filing: 07.01.2025
(51) Int. Cl.: G06F 9/48, G06F 9/50

(54) **TASK SCHEDULING SYSTEM AND TASK SCHEDULING METHOD CAPABLE OF SCHEDULING A TASK DYNAMICALLY WHEN PROCESSORS AND MEMORY SUBSYSTEM ARE OPERATED IN REAL SCENARIOS FOR PRACTICAL APPLICATIONS**

(30) Priority: 16.01.2024 US 202463621201 P; 17.12.2024 US 202418983406
(71) Applicant: MediaTek Inc., Hsinchu City, 30078 (TW)
(72) Inventor: CHEN, Jia-Ming, Hsinchu City 30078 (TW); LIN, Han-Yi, Hsinchu City 30078 (TW); CHEN, Yu-Pin, Hsinchu City 30078 (TW)
(74) Representative: Hoefer & Partner Patentanwälte mbB

(57) **Abstract**

A task scheduling method (400) includes retrieving at least first data generated by monitoring a plurality of processors and second data generated by monitoring a memory subsystem (410), generating task type data and processor type data according to at least the first data and the second data (420), dynamically estimating current capacities and maximum capacities of the plurality of processors according to the task type data and the processor type data (430), generating prediction data according to the task type data, the processor type data, and the current capacities and the maximum capacities of the plurality of processors (440), scheduling a task according to the task type data, the processor type data, the prediction data, and the current capacities and the maximum capacities of the plurality of processors (450).

## Description

### CROSS REFERENCE TO RELATED APPLICATIONS

This application claims the benefit of U.S. Provisional Application No. 63/621,201, filed on January 16th, 2024. The content of the application is incorporated herein by reference.

### BACKGROUND

In the domain of computer science, the processing of a task necessitates its scheduling. This involves the dispatching of the task to a suitable processor and the selection of an optimal operating performance point. The objective of these operations is to strike a balance between energy efficiency and performance. Presently, the data utilized for the selection of processors and operating performance points is static. Consequently, it is frequently observed in practical applications that the outcomes of task scheduling are suboptimal, leading to either excessive energy consumption or compromised performance.

### SUMMARY

A task scheduling system and a task scheduling method according to the invention are defined in the independent claims. The dependent claims define preferred embodiments thereof. An embodiment provides a task scheduling system including a plurality of processors, a memory subsystem, a classifier, a capacity mapping module, a task utilization statistics and prediction module, and a task scheduler. The memory subsystem is coupled to the plurality of processors. The classifier is linked to the plurality of processors and the memory subsystem, and is used to retrieve at least first data and second data, and generate task type data and processor type data according to at least the first data and the second data. The first data is generated by monitoring the plurality of processors, and the second data is generated by monitoring the memory subsystem. The capacity mapping module is linked to the classifier, and is used to dynamically estimate current capacities and maximum capacities of the plurality of processors according to the task type data and the processor type data. The task utilization statistics and prediction module is linked to the classifier and the capacity mapping module, and is used to generate prediction data according to the task type data, the processor type data, and the current capacities and the maximum capacities of the plurality of processors. The task scheduler is linked to the task utilization statistics and prediction module, the classifier and the capacity mapping module, and is used to schedule a task according to the task type data, the processor type data, the prediction data, and the current capacities and the maximum capacities of the plurality of processors.

Another embodiment provides a task scheduling method. The task scheduling method includes retrieving at least first data generated by monitoring a plurality of processors and second data generated by monitoring a memory subsystem, generating task type data and processor type data according to at least the first data and the second data, dynamically estimating current capacities and maximum capacities of the plurality of processors according to the task type data and the processor type data, generating prediction data according to the task type data, the processor type data, and the current capacities and the maximum capacities of the plurality of processors, scheduling a task according to the task type data, the processor type data, the prediction data, and the current capacities and the maximum capacities of the plurality of processors.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

FIG.1 illustrates a task scheduling system according to an embodiment.
FIG.2 illustrates a task scheduling system according to another embodiment.
FIG.3 illustrates execution time of past tasks on a timeline, and corresponding time of the task to be scheduled on the timeline, in an example.
FIG.4 is a flowchart of a task scheduling method used in FIG.1 and FIG.2.

### DETAILED DESCRIPTION

In the text, the conjunction "and/or" when used to connect multiple items within a phrase, signifies that each item, individually or in any possible combination with other items, may be applicable. In the text, the term "coupled" is used to denote a physical connection between two objects. The term "linked" implies that the connection between two objects may be physical and/or wireless. This connection, or path, may include a combination of both physical and wireless connections.

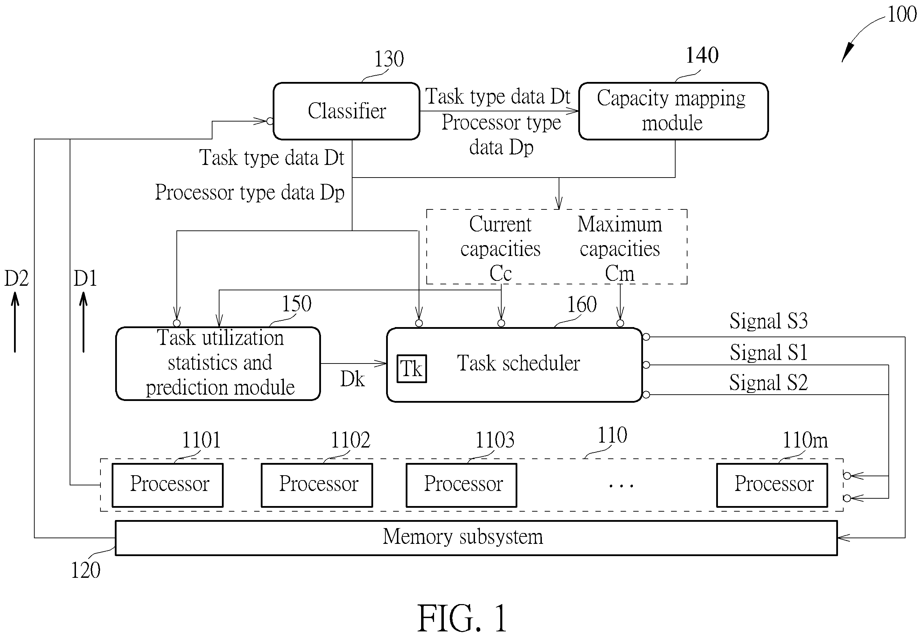

FIG.1 illustrates a task scheduling system 100 according to an embodiment. The task scheduling system 100 can include a plurality of processors 110, a memory subsystem 120, a classifier 130, a capacity mapping module 140, a task utilization statistics and prediction module 150, and a task scheduler 160. The task scheduling system 100 can be used to schedule a task Tk. Specifically, scheduling the task Tk involves dispatching the task Tk to an appropriate processor of the processors 110, as well as selecting appropriate settings of the processors 110 and the memory subsystem 120 for processing the task Tk.

The processors 110 can include m processors 1101 to 110m. The parameter m can be an integer larger than 1. The processors 110 can be a plurality of cores of a processing unit. For example, the cores can include a performance core (P-core) and an efficiency core (E-core). A performance core can operate with higher clock speeds, hyper-threading, and higher power consumption, and can handle important data and be used for heavy tasks. An efficiency core can consume less power than a performance core, and handle minor tasks. For example, the processors 110 can be embedded in a CPU (central processing unit), a GPU (graphic processing unit), a TPU (tensor processing unit), an NPU (neural network processing unit), a DPU (deep-learning processing unit), a microprocessor, and/or a microcontroller.

The memory subsystem 120 can be coupled to the processors 110. The memory subsystem 120 can include a main memory and/or a cache memory. The memory subsystem 120 can include a static random-access memory (SRAM), a dynamic random-access memory (DRAM), a flash memory, and/or another type of memory.

The classifier 130 can be linked to the processors 110 and the memory subsystem 120. The classifier 130 can retrieve at least first data D1 and second data D2. The classifier 130 can generate task type data Dt and processor type data Dp according to at least the first data D1 and the second data D2.

The task type data Dt is used to classify the task Tk to one of a plurality of task types according to instructions in the task Tk. Therefore, the task scheduling system 100 does not treat all tasks as the same type, but customizes each task based on its content. The processor type data Dp can be used to reflect variations of capacities of the processors 110.

The capacity of a processor may vary with different application scenarios. For instance, if a primary thread and most housekeeping tasks are executed on the same processor, it tends to lower the processor's capacity. Conversely, if the primary thread is executed on one processor while most housekeeping tasks are run on different processors, it can enhance the processor's capacity. In real-world scenarios and practical applications, the task scheduling system 100 can generate and access the processor type data Dp in real time. This allows for a timely and accurate evaluation of the capacities of processors 110, rather than relying on predefined and static data for capacity mapping.

The first data D1 can be generated by monitoring the processors 110, and the second data D2 can be generated by monitoring the memory subsystem 120. The first data D1 can include a performance monitor unit (PMU) event generated by using a performance monitor unit to measure the processors 110. The second data D2 can include a performance monitor unit event, a bandwidth and/or a latency of the memory subsystem 120. A performance monitor unit can include a set of counters to record various architectural and micro-architectural events.

The first data D1 and the second data D2 can be retrieved when the processors 110 are operated in real scenarios for practical applications and/or operated to execute a benchmark in a test condition. When the processors 110 are operated in real scenarios for practical applications, the processors 110 are in "runtime". When the processors 110 are in a test condition instead of a real scenario, it can be described as in static and "offline" situations. The first data D1 and the second data D2 can be retrieved when the processors 110 are in runtime and/or offline.

The capacity mapping module 140 can be linked to the classifier 130 for dynamically estimating current capacities Cc and maximum capacities Cm of the processors 110 according to the task type data Dt and the processor type data Dp. The current capacities Cc can be generated based on current operating performance points (OPPs) of the processors 110. The maximum capacities Cm can be generated based on maximum operating performance points of the processors 110. An operating performance point can indicate an operating frequency and/or an operating voltage.

The task utilization statistics and prediction module 150 can be linked to the classifier 130 and the capacity mapping module 140, and used to generate prediction data Dk according to the task type data Dt, the processor type data Dp, and the current capacities Cc and the maximum capacities Cm of the processors 110. The task scheduler 160 can be linked to the task utilization statistics and prediction module 150, the classifier 130 and the capacity mapping module 140. The task scheduler 160 can be used to schedule the task Tk according to the task type data Dt, the processor type data Dp, the prediction data Dk, and the current capacities Cc and the maximum capacities Cm of the processors 110.

For scheduling the task Tk, the task scheduler 160 can determine a target processor of the processors 100, a target operating performance point of the target processor, and a resource request. The task scheduler 160 can generate a signal S1 indicating the target processor, and send the signal S1 to control the processors 110. The task scheduler 160 can generate a signal S2 indicating the target operating performance point of the target processor, and send the signal S2 to control the processors 110. The task scheduler 160 can generate a signal S3 indicating the resource request, and send the signal S3 to control the memory subsystem 120. The resource request carried in the signal S3 can include an operating frequency, an operating voltage, a bandwidth and/or a latency used to control the memory subsystem 120.

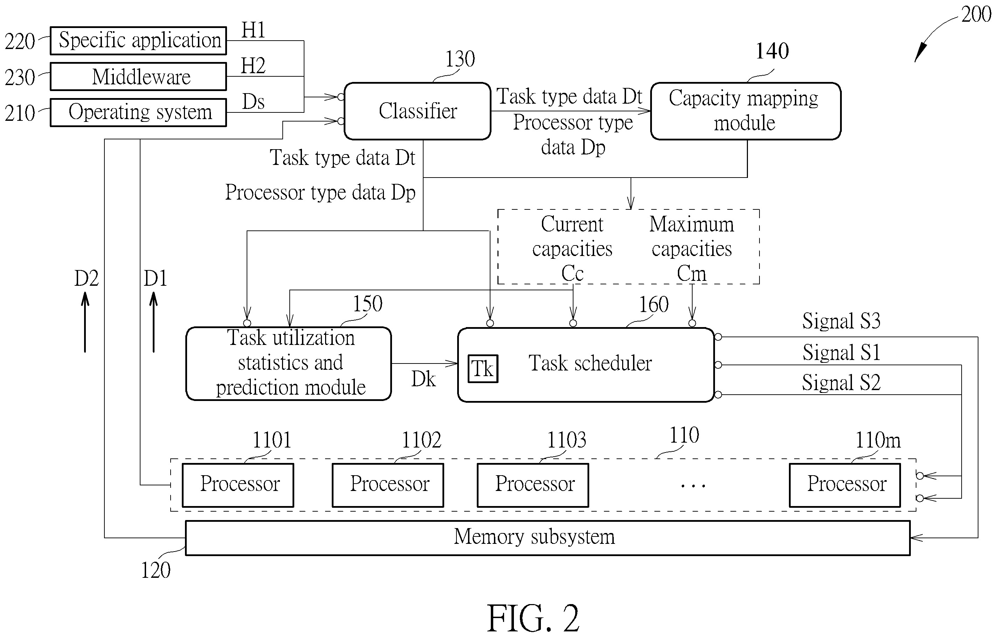

FIG.2 illustrates a task scheduling system 200 according to another embodiment. The similarities between FIG.1 and FIG.2 are not reiterated. In FIG.2, in addition to the first data D1 and the second data D2, the classifier 130 can further retrieve operating system (OS) data Ds from an operating system 210, first hints H1 from a specific application (APP) 220, and second hints H2 from middleware 230. The classifier 130 can generate the task type data Dt and the processor type data Dp according to the first data D1, the second data D2, the operating system data Ds, the first hints H1 and the second hints H2.

In the first hints H1 and the second hints H2, each hint can serve as a piece of information or a parameter that guides the execution or behavior of a program, system or middleware. The operating system data Ds can include information about a system call (syscall). A syscall is a mechanism through which a computer program can request a service from the kernel of the operating system. Additionally, the operating system data Ds can also include information about memory usage.

In FIG.2, the operating system 210, the specific application 220 and the middleware 230 can be operated with software, firmware and/or hardware. The operating system 210 can manage all the hardware and other software on a computer. The specific application 220 can be installed and run on a computer, tablet, smartphone or other electronic devices. The specific application 220 can include a mobile application or a piece of software installed in a mobile device or a computer. The middleware 230 can act as a bridge between different applications, systems, or databases in a network. The middleware 230 enables communication and data management by providing a set of services that allow these different components to interact with each other seamlessly.

In FIG.1 and FIG.2, the classifier 130, the capacity mapping module 140, the task utilization statistics and prediction module 150, and the task scheduler 160 can be implemented using software, hardware and/or firmware. The classifier 130, the capacity mapping module 140, the task utilization statistics and prediction module 150, and the task scheduler 160 can be implemented as integrated circuits. The integrated circuits can be designed using a hardware description language (HDL) in a netlist file and subsequently synthesized for physical implementation. At least one member selected from a group comprising the classifier 130, the capacity mapping module 140, the task utilization statistics and prediction module 150, and the task scheduler 160 can include a neural network and/or a machine learning model to enhance the precision of operations over a period of time.

The capacity mapping module 140 is responsible for the process of mapping between task types and processor capacities. This mapping process considers several factors, including device utilization, heat maps, resource-to-power consumption mapping, load management, performance analysis, and capacity planning. The capacity mapping module 140 may include a conversion formula and/or a mapping table used to dynamically estimate the current capacities Cc and the maximum capacities Cm of the processors 110, based on the task type data Dt and the processor type data Dp.

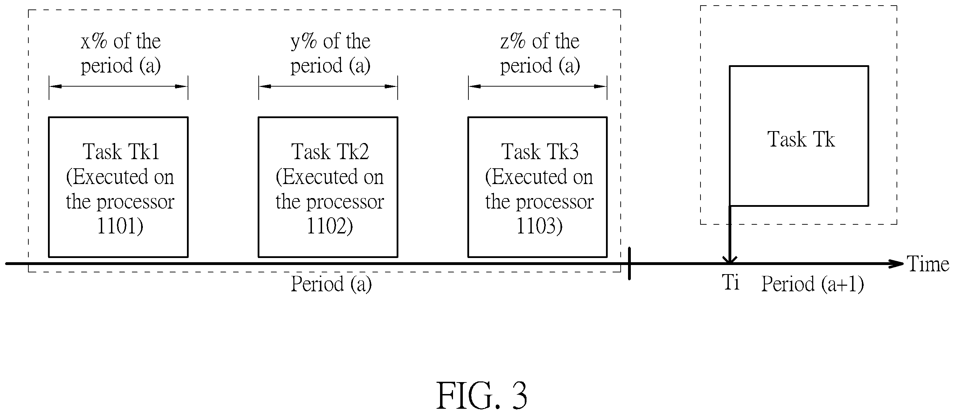

FIG.3 illustrates execution time of past tasks Tk1, Tk2 and Tk3 on a timeline, and corresponding time Ti of the task Tk on the timeline, in an example. A period (a) and a period (a+1) can be two consecutive periods, and the period (a) can precede the period (a+1). In the period (a), the tasks Tk1, Tk2 and Tk3 can be executed. In the period (a+1), the task Tk can be scheduled and ready to be executed at the time Ti.

For example, the tasks Tk1, Tk2 and Tk3 can be executed on the processors 1101, 1102 and 1103 of the processors 110 respectively. FIG.3 is merely an example, the tasks Tk1, Tk2 and Tk3 can also be executed on other processor(s) of the processors 110, or can be executed on the same processor. In another example, the tasks Tk1, Tk2 and Tk3 may be different portions of the same task.

The execution time of the tasks Tk1, Tk2 and Tk3 can be x%, y%, and z% of the period (a), respectively. Since there may be idle time between the execution of two tasks, the sum of x%, y%, and z% can be equal to or less than 100% (i.e. x% + y% + z% ≤ 100%).

In FIG.1 to FIG.3, the task utilization statistics and prediction module 150 can utilize the information from the period (a) to enable the task scheduler 160 to accomplish the scheduling of the task Tk in the period (a+1). The task utilization statistics and prediction module 150 can generate the prediction data Dk based on the execution time information of the tasks Tk1, Tk2, and Tk3, and then the task scheduler 160 can schedule the task Tk according to the prediction data Dk. In other words, the task utilization statistics and prediction module 150 can generate the prediction data Dk according to the execution time information of a plurality of past tasks (e.g., Tk1, Tk2, and Tk3) executed on the processors 110, where the execution time information can be retrieved from the first data D1.

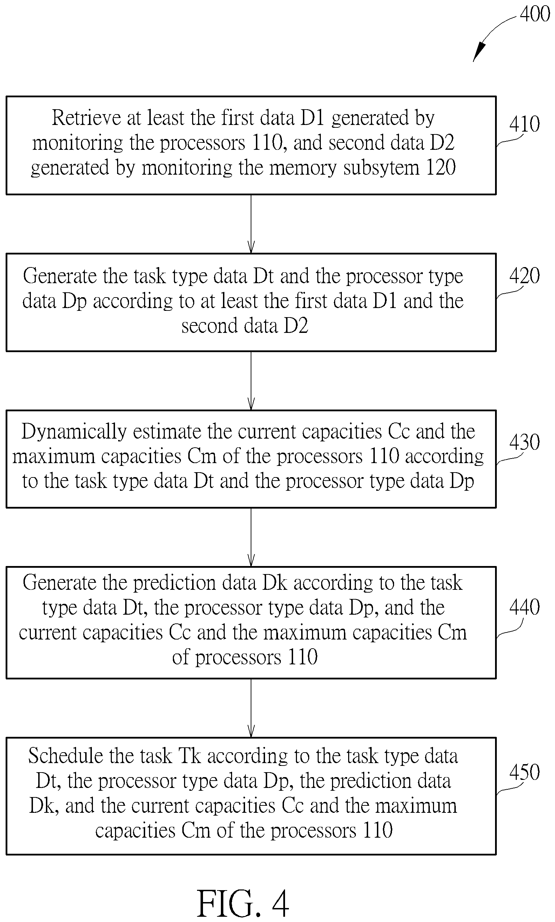

FIG.4 is a flowchart of a task scheduling method 400 used in FIG.1 and FIG.2. The task scheduling method 400 can include following steps.

Step 410: retrieve at least the first data D1 generated by monitoring the processors 110, and second data D2 generated by monitoring the memory subsystem 120;

Step 420: generate the task type data Dt and the processor type data Dp according to at least the first data D1 and the second data D2;

Step 430: dynamically estimate the current capacities Cc and the maximum capacities Cm of the processors 110 according to the task type data Dt and the processor type data Dp;

Step 440: generate the prediction data Dk according to the task type data Dt, the processor type data Dp, and the current capacities Cc and the maximum capacities Cm of processors 110; and

Step 450: schedule the task Tk according to the task type data Dt, the processor type data Dp, the prediction data Dk, and the current capacities Cc and the maximum capacities Cm of the processors 110.

Step 410 and Step 420 can be performed with the classifier 130. Step 430 can be performed with the capacity mapping module 140. Step 440 can be performed with the task utilization statistics and prediction module 150. Step 450 can be performed with task scheduler 160.

In summary, through the task scheduling systems 100 and 200, as well as the task scheduling method 400, when the processors 110 and the memory subsystem 120 are operated in real scenarios for practical applications in runtime, the current capacities Cc and the maximum capacities Cm of the processors 110 can be estimated dynamically based on the operations of the processors 110 and the memory subsystem 120. Furthermore, based on the data of the processors 110 and the memory subsystem 120, the task types, and the processor types, an incoming task (for example, the task Tk) is scheduled in real-time and dynamically. Each of the task scheduling systems 100 and 200 can form a feedback loop structure. The processors 110 and the memory subsystem 120 can be observed, the processors 110 and the memory subsystem 120 can be controlled to schedule the task Tk based on this observation. Then, the processors 110 and the memory subsystem 120 are measured again, and this measurement is used to schedule incoming tasks. Therefore, the accuracy of task scheduling is effectively enhanced, reducing power consumption, and improving the performance of executing tasks.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A task scheduling system (100; 200) comprising:
a plurality of processors (110);
a memory subsystem (120) coupled to the plurality of processors (110);
a classifier (130) linked to the plurality of processors (110) and the memory subsystem (120), and configured to retrieve at least first data (D1) and second data (D2), and generate task type data (Dt) and processor type data (Dp) according to at least the first data (D1) and the second data (D2), where the first data (D1) is generated by monitoring the plurality of processors (110), and the second data (D2) is generated by monitoring the memory subsystem (120);
a capacity mapping module (140) linked to the classifier (130), and configured to dynamically estimate current capacities (Cc) and maximum capacities (Cm) of the plurality of processors (110) according to the task type data (Dt) and the processor type data (Dp);
a task utilization statistics and prediction module (150) linked to the classifier (130) and the capacity mapping module (140), and configured to generate prediction data (Dk) according to the task type data (Dt), the processor type data (Dp), and the current capacities (Cc) and the maximum capacities (Cm) of the plurality of processors (110); and
a task scheduler (160) linked to the task utilization statistics and prediction module (150), the classifier (130) and the capacity mapping module (140), and configured to schedule a task (Tk) according to the task type data (Dt), the processor type data (Dp), the prediction data (Dk), and the current capacities (Cc) and the maximum capacities (Cm) of the plurality of processors (110).

2. The task scheduling system (100; 200) of claim 1, wherein the task type data (Dt) is used to classify the task (Tk) to one of a plurality of task types according to instructions in the task (Tk); and/or
wherein the processor type data (Dp) is used to reflect variations of capacities of the plurality of processors (110).

3. The task scheduling system (100; 200) of claim 1 or 2, wherein the task scheduler (160) determines a target processor of the plurality of processors (110), a target operating performance point, in the following also referred to as OPP, of the target processor, and a resource request
wherein preferably the resource request comprises an operating frequency, an operating voltage, a bandwidth and/or a latency used to control the memory subsystem (120).

4. The task scheduling system (200) of any one of claims 1 to 3, wherein:
the classifier (130) is further configured to retrieve operating system data (Ds) from an operating system (210), first hints (H1) from a specific application, in the following also referred to as APP, (220) and second hints (H2) from middleware (230); and
the classifier (130) generates the task type data (Dt) and the processor type data (Dp) according to the first data (D1), the second data (D2), the operating system data (Ds), the first hints (H1) and the second hints (H2).

5. The task scheduling system (100; 200) of any one of claims 1 to 4, wherein the first data (D1) comprises a performance monitor unit, in the following also referred to as PMU, event of the plurality of processors (110); and/or
wherein the second data (D2) comprises a PMU event, a bandwidth and/or a latency of the memory subsystem (120); and/or
wherein the first data (D1) and the second data (D2) are retrieved when the plurality of processors (110) are operated in real scenarios for practical applications and/or operated to execute a benchmark in a test condition.

6. The task scheduling system (100; 200) of any one of claims 1 to 5, wherein the task utilization statistics and prediction module (150) generates the prediction data (Dk) according to execution time information of a plurality of past tasks executed on the plurality of processors (110).

7. The task scheduling system (100; 200) of any one of claims 1 to 6, wherein the classifier (130), the capacity mapping module (140), the task utilization statistics and prediction module (150) and the task scheduler (160) are implemented using integrated circuit.

8. The task scheduling system (100; 200) of any one of claims 1 to 7, wherein at least one member selected from a group comprising the classifier (130), the capacity mapping module (140), the task utilization statistics and prediction module (150), and the task scheduler (160) comprises a neural network and/or a machine learning model.

9. The task scheduling system (100; 200) of any one of claims 1 to 8, wherein the capacity mapping module (140) comprises a conversion formula and/or a mapping table used to dynamically estimate the current capacities and the maximum capacities of the plurality of processors (110) according to the task type data and the processor type data.

10. A task scheduling method (400) comprising:
retrieving at least first data generated by monitoring a plurality of processors, and second data generated by monitoring a memory subsystem (410);
generating task type data and processor type data according to at least the first data and the second data (420);
dynamically estimating current capacities and maximum capacities of the plurality of processors according to the task type data and the processor type data (430);
generating prediction data according to the task type data, the processor type data, and the current capacities and the maximum capacities of the plurality of processors (440); and
scheduling a task according to the task type data, the processor type data, the prediction data, and the current capacities and the maximum capacities of the plurality of processors (450).

11. The task scheduling method of claim 10, wherein scheduling the task (450) comprises determining a target processor of the plurality of processors, a target operating performance point, in the following also referred to as OPP, of the target processor, and a resource request.

12. The task scheduling method of claim 10 or 11, wherein:
retrieving at least the first data and the second data (410) is retrieving the first data, the second data, operating system data from an operating system, first hints from a specific application, in the following also referred to as APP, and second hints from middleware; and
generating the task type data and the processor type data according to at least the first data and the second data (420) is generating the task type data and the processor type data according to the first data, the second data, the operating system data, the first hints and the second hints.

13. The task scheduling method of any one of claims 10 to 12, wherein the first data comprises a performance monitor unit, in the following also referred to as PMU, event of the plurality of processors; and/or
wherein the second data comprises a PMU event, a bandwidth and/or a latency of the memory subsystem.

14. The task scheduling method of any one of claims 10 to 13, wherein:
generating the prediction data according to the task type data, the processor type data, and the current capacities and the maximum capacities of the plurality of processors (440) comprises generating the prediction data according to execution time information of a plurality of past tasks executed on the plurality of processors; and
the execution time information is retrieved from the first data.

15. The task scheduling method of any one of claims 10 to 14, wherein dynamically estimating the current capacities and the maximum capacities of the plurality of processors according to the task type data and the processor type data (430) comprises:
using a conversion formula and/or a mapping table to dynamically estimate the current capacities and the maximum capacities of the plurality of processors according to the task type data and the processor type data.

## Amended claims

### Amended claims in accordance with Rule 137(2) EPC.

1. A task scheduling system (100; 200) comprising:
a plurality of processors (110);
a memory subsystem (120) coupled to the plurality of processors (110);
a classifier (130) linked to the plurality of processors (110) and the memory subsystem (120), and configured to retrieve at least first data (D1) and second data (D2), and generate task type data (Dt) and processor type data (Dp) according to at least the first data (D1) and the second data (D2), where the first data (D1) is generated by monitoring the plurality of processors (110), and the second data (D2) is generated by monitoring the memory subsystem (120), wherein the task type data (Dt) is used to classify a task (Tk) to one of a plurality of task types according to instructions in the task (Tk), and the processor type data (Dp) is used to reflect variations of capacities of the plurality of processors (110), and wherein the first data (D1) comprises a performance monitor unit, in the following also referred to as PMU, event of the plurality of processors (110), and the second data (D2) comprises a PMU event, a bandwidth and/or a latency of the memory subsystem (120);
a capacity mapping module (140) linked to the classifier (130), and configured to dynamically estimate current capacities (Cc) and maximum capacities (Cm) of the plurality of processors (110) according to the task type data (Dt) and the processor type data (Dp);
a task utilization statistics and prediction module (150) linked to the classifier (130) and the capacity mapping module (140), and configured to generate prediction data (Dk) according to the task type data (Dt), the processor type data (Dp), and the current capacities (Cc) and the maximum capacities (Cm) of the plurality of processors (110); and
a task scheduler (160) linked to the task utilization statistics and prediction module (150), the classifier (130) and the capacity mapping module (140), and configured to schedule the task (Tk) according to the task type data (Dt), the processor type data (Dp), the prediction data (Dk), and the current capacities (Cc) and the maximum capacities (Cm) of the plurality of processors (110).

2. The task scheduling system (100; 200) of claim 1, wherein the task scheduler (160) determines a target processor of the plurality of processors (110), a target operating performance point, in the following also referred to as OPP, of the target processor, and a resource request
wherein preferably the resource request comprises an operating frequency, an operating voltage, a bandwidth and/or a latency used to control the memory subsystem (120).

3. The task scheduling system (200) of claim 1 or 2, wherein:
the classifier (130) is further configured to retrieve operating system data (Ds) from an
operating system (210), first hints (H1) from a specific application, in the following also referred to as APP, (220) and second hints (H2) from middleware (230); and the classifier (130) generates the task type data (Dt) and the processor type data (Dp)
according to the first data (D1), the second data (D2), the operating system data (Ds), the first hints (H1) and the second hints (H2).

4. The task scheduling system (100; 200) of any one of claims 1 to 3,
wherein the first data (D1) and the second data (D2) are retrieved when the plurality of processors (110) are operated in real scenarios for practical applications and/or operated to execute a benchmark in a test condition.

5. The task scheduling system (100; 200) of any one of claims 1 to 4, wherein the task utilization statistics and prediction module (150) generates the prediction data (Dk) according to execution time information of a plurality of past tasks executed on the plurality of processors (110).

6. The task scheduling system (100; 200) of any one of claims 1 to 5, wherein the classifier (130), the capacity mapping module (140), the task utilization statistics and prediction module (150) and the task scheduler (160) are implemented using integrated circuit.

7. The task scheduling system (100; 200) of any one of claims 1 to 6, wherein at least one member selected from a group comprising the classifier (130), the capacity mapping module (140), the task utilization statistics and prediction module (150), and the task scheduler (160) comprises a neural network and/or a machine learning model.

8. The task scheduling system (100; 200) of any one of claims 1 to 7, wherein the capacity mapping module (140) comprises a conversion formula and/or a mapping table used to dynamically estimate the current capacities and the maximum capacities of the plurality of processors (110) according to the task type data and the processor type data.

9. A task scheduling method (400) comprising:
retrieving at least first data generated by monitoring a plurality of processors, and second data generated by monitoring a memory subsystem (410), wherein the first data comprises a performance monitor unit, in the following also referred to as PMU, event of the plurality of processors, and the second data comprises a PMU event, a bandwidth and/or a latency of the memory subsystem;
generating task type data and processor type data according to at least the first data and the second data (420), wherein the task type data is used to classify a task to one of a plurality of task types according to instructions in the task, and the processor type data is used to reflect variations of capacities of the plurality of processors;
dynamically estimating current capacities and maximum capacities of the plurality of processors according to the task type data and the processor type data (430);
generating prediction data according to the task type data, the processor type data, and the current capacities and the maximum capacities of the plurality of processors (440); and
scheduling a task according to the task type data, the processor type data, the prediction data, and the current capacities and the maximum capacities of the plurality of processors (450).

10. The task scheduling method of claim 9, wherein scheduling the task (450) comprises determining a target processor of the plurality of processors, a target operating performance point, in the following also referred to as OPP, of the target processor, and a resource request.

11. The task scheduling method of claim 9 or 10, wherein:
retrieving at least the first data and the second data (410) is retrieving the first data, the second data, operating system data from an operating system, first hints from a specific application, in the following also referred to as APP, and second hints from middleware; and
generating the task type data and the processor type data according to at least the first data and the second data (420) is generating the task type data and the processor type data according to the first data, the second data, the operating system data, the first hints and the second hints.

12. The task scheduling method of any one of claims 9 to 11, wherein:
generating the prediction data according to the task type data, the processor type data, and the current capacities and the maximum capacities of the plurality of processors (440) comprises generating the prediction data according to execution time information of a plurality of past tasks executed on the plurality of processors; and
the execution time information is retrieved from the first data.

13. The task scheduling method of any one of claims 9 to 12, wherein dynamically estimating the current capacities and the maximum capacities of the plurality of processors according to the task type data and the processor type data (430) comprises:
using a conversion formula and/or a mapping table to dynamically estimate the current capacities and the maximum capacities of the plurality of processors according to the task type data and the processor type data.
